# EUROPEAN PATENT SPECIFICATION

(11) **EP 2 697 321 B1**
(45) Date of publication and mention of the grant of the patent: **15.07.2015**
(21) Application number: 12713191.0
(22) Date of filing: 13.04.2012
(51) Int. Cl.: C09D 167/00, C09D 167/02, C09J 167/00, C09J 167/02, C08J 7/04, C09J 5/06

(54) **LAMINATE COMPRISING CARRIER AND COATING LAYER**
LAMINAT MIT GRUND- UND DECKSCHICHT
STRATIFIÉ COMPRENANT UN SUPPORT ET UNE COUCHE DE REVÊTEMENT

(30) Priority: 14.04.2011 EP 11162437; 14.04.2011 US 201161475423 P; 14.04.2011 EP 11162445; 14.04.2011 US 201161475411 P
(43) Date of publication of application: 19.02.2014
(73) Proprietor: Universiteit van Amsterdam, 1012 WX Amsterdam (NL)
(72) Inventor: ALBERTS, Albert Henderikus, NL-1013 NG Amsterdam (NL); ROTHENBERG, Gad, NL-2341 NV Oegstgeest (NL)
(74) Representative: De Vries & Metman
(86) International application number: PCT/EP2012/056844
(87) International publication number: WO 2012/140238

(56) References cited:
- EP-A2- 1 219 695
- US-A- 5 370 938

## Description

### FIELD

The present invention pertains to a laminate comprising a carrier and a coating layer. The invention also pertains to a laminate wherein a second carrier is applied over at least part of the coating layer, that is, a laminate wherein the coating layer acts as adhesive to adhere the carriers together.

### BACKGROUND

Coatings and adhesives are used in numerous applications, to coat numerous types of materials, and to adhere numerous types of materials together. Depending on the type, various problems are associated with conventional coatings and adhesives.

A first problem is that it is difficult to obtain adhesives which are able to adhere different types of carriers to each other. Glass and metal are particularly difficult to glue.

A second problem, which is of particular relevancy in the manufacture of materials with a relatively short life cycle, is that numerous adhesives are based on polymers containing aromatic rings or heteroatoms, particularly nitrogen or sulphur. As a consequence, when these materials are disposed, they cannot be disposed of as organic waste, and when burned they may cause the release of undesirable components. Additionally, coatings and adhesives need to meet the usual requirements for these types of materials, such as good adhesive properties, easy application, good curing properties, durability, scratch resistance, chemical resistance, stable layer thickness, etc.

US 5 370 938 A discloses laminates comprising carrier materials bonded by an adhesive layer including a polyester resin.

### SUMMARY

The present invention provides a solution to these problems. More in particular, the present invention pertains to a laminate which good properties, which is characterized by the use of a specific polymer. Further characterizing features and embodiments of the present invention will become apparent from the further description of the invention.

The invention provides a laminate comprising a carrier and a coating layer, wherein the coating layer is applied over at least part of the carrier, the coating layer comprising a polyester derived from an aliphatic polyalcohol with 2-15 carbon atoms and a polyacid, the coating layer having a thickness in the range of 10-4000 microns, wherein the aliphatic polyalcohol contains at least 50 mol.% of glycerol and the polyacid contains at least 30 wt.% of tricarboxylic acid. Preferably, said laminate comprises a second carrier applied over at least part of the coating layer. Preferably, said laminate comprising a further coating layer applied over at least part of the second carrier, with optional further carrier-coating stacks applied over the further carrier.

The invention further provides a laminate comprising a stack of carriers with coating layers sandwiched between the carriers, and/or applied on one or more outer surfaces of the laminate, at least one of the coating layers comprising a polyester derived from an aliphatic polyalcohol with 2-15 carbon atoms and polyacid and having a thickness in the range of 10-4000 microns, wherein the aliphatic polyalcohol contains at least 50 mol.% of glycerol and the polyacid contains at least 30 wt.% of tricarboxylic acid.

In a preferred embodiment of a laminate according to the invention, said polyalcohol comprises at least 70 mol%, more in particular at least 90 mole%, or even at least 95 mole% of glycerol, or consists essentially of glycerol.

In preferred embodiment of a laminate according to the invention, the acid contains at least 50 wt.% of tricarboxylic acid, calculated on the total amount of acid, preferably at least 70 wt.%, more in particular at least 90 wt.%, or even at least 95 wt.%. In this preferred embodiment, it is preferred that the acid contains at least 50 mol% of citric acid, preferably at least 70 mole%, more in particular at least 90 mole%, or even at least 95 mole%.

In a another preferred embodiment, the acid contains at least 10 wt.% of dicarboxylic acid, calculated on the total amount of acid, preferably at least 30 wt.%, more preferably at least 50 wt.%. In this preferred embodiment, it is further preferred that said dicarboxylic acid comprises at least 50 mol% of succinic acid, preferably at least 70 mole%, more in particular at least 90 mole%, or even at least 95 mole%. Alternatively, in this preferred embodiment, it is preferred that said dicarboxylic acid contains at least 50 mol% of itaconic acid, preferably at least 70 mole%, more in particular at least 90 mole%, or even at least 95 mole%.

In another embodiment of a laminate according to the invention, the carrier is a wood-based material. In this embodiment, it is preferred that the laminate comprises 2-20 wood-based carrier layers, for example 2-5 wood-based carrier layers, with a thickness of, e.g., 0.2-5 mm, in particular 0.5-3 mm. In a further preferred embodiment thereof, a further coating layer is applied on one or more outer surfaces of the laminate.

In another aspect, the invention provides a method for manufacturing a laminate according to the laminate of the invention wherein a carrier is provided with a layer of a coating composition comprising a polyester derived from aliphatic polyalcohol and polyacid, wherein the aliphatic polyalcohol contains at least 50 mol.% of glycerol and the polyacid contains at least 30 wt.% of tricarboxylic acid, and the coated carrier is kept at a temperature of 20 to 200°C for a period of 5 minutes to 5 days.

The invention provides further a kit of parts comprising a part susceptible to degradation by thermal loads and part comprising a laminate according to the invention. Preferably, said kit of parts is an assembly comprising a part susceptible to degradation by thermal loads and a cover surrounding said part in whole or in part, wherein the cover comprises a polyester derived from an aliphatic polyalcohol with 2-15 carbon atoms and a polyacid, wherein the aliphatic polyalcohol contains at least 50 mol.% of glycerol and the polyacid contains at least 30 wt.% of tricarboxylic acid.

In a further aspect the invention provides a part for use in a kit of parts according to the invention, which comprises a laminate according to the invention. Preferably, said part is a cover for use in an assembly as defined above.

The invention further provides the use of a laminate according to the invention as flame retardant material.

In a further aspect, the invention provides a method for decreasing the fire-propagating properties of a system comprising incorporating therein a part comprising a laminate according to the invention.

The invention further provides a fire-protecting cover comprising a laminate according to the invention. Preferably, said fire-protecting cover is intended for protecting the human or animal body.

### DETAILED DESCRIPTION

The present invention pertains to a laminate comprising a carrier and a coating layer, wherein the coating layer is applied over at least part of the carrier, the coating layer comprising a polyester derived from an aliphatic polyalcohol with 2-15 carbon atoms and a polyacid, the coating layer having a thickness in the range of 10-4000 microns, wherein the aliphatic polyalcohol contains at least 50 mol.% of glycerol and the polyacid contains at least 30 wt.% of tricarboxylic acid.

It has been found that the selection of the specific type of polymer allows the manufacture of laminates which, depending on their other components, show a clear burning profile and can be disposed as organic waste. Further, the coating layer is stable and sturdy.

A particular feature of the coating layer is that it shows scratch-resistant properties. More specifically, depending on its exact composition it may show self-healing properties.

A further particular feature of the laminate is that concrete and other aqueous compositions do not adhere to it. This makes it particularly suitable for use in molds in the processing of concrete.

Further, it has been found that, in contrast with many conventional coating compositions, the polymer shows good adherence to glass. Therefore the polymer is particularly suitable for the manufacture of laminates involving one or more ceramic (including glass) carriers.

Further, it has been found that the coating layer shows good chemical resistance, e.g. to acetone and other polar solvents. A further feature of the present invention is that the polymer has been found to show good fire-retardant properties.

ratio between the two types of acid may vary within wide ranges, depending on the properties of the desired material. In one embodiment, the dicarboxylic acid makes up between 2 and 70 wt.% of the total of dicarboxylic and tricarboxylic acid, in particular between 5 and 70 wt.%, more in particular between 10 and 70 wt.%, depending on the properties of the desired material. It is noted that the preferred ranges for the tricarboxylic acid specified above are also applicable to this embodiment.

It has been found that the use of a tricarboxylic acid, in particular citric acid, in combination with the tri-alcohol glycerol results in the formation of a high-quality laminate. Not wishing to be bound by theory it is believed that there are a number of reasons why the use of a tri-acid in combination with glycerol results in the formation of a high-quality laminate. In the first place, the use of a tri-acid in combination with a tri-ol makes for a highly crosslinked polymer, resulting in increased strength. Further, where a tri-acid and a tri-ol are used, there is a large possibility of acid and/or hydroxyl groups to physically or chemically interact with active groups on the substrate. This leads to improved bonding between the substrate and the polymer, which is a key desire in creating a laminate. The degree of interaction can be controlled by selection of the amount of triacid and trialcohol, and by selecting the degree of polymerization. It is noted that this is a key difference with laminates based on di-acids polymerised with di-ols.

The dicarboxylic acid may be any dicarboxylic acid which has two carboxylic acid groups and, in general, at most 15 carbon atoms. Examples of suitable dicarboxylic acids include itaconic acid, malic acid, succinic acid, glutaric acid, adipic acid and sebacic acid. Itaconic acid and succinic acid may be preferred.

The tricarboxylic acid may be any tricarboxylic acid which has three carboxylic acid groups and, in general, at most 15 carbon atoms. Examples include citric acid, isocitric acid, aconitic acid (both cis and trans), and 3-carboxy-cis,cis-muconic acid. The use of citric acid is considered preferable, both for reasons of costs and of availability. The citric acid can be provided in anhydrous form. However, as the presence of water is not detrimental to the process, it is possible, and preferred to use citric acid monohydrate as starting material.

In one embodiment the acid contains at least 50 mol% of citric acid, preferably at least 70 mole%, more in particular at least 90 mole%, or even at least 95 mole%. In one embodiment the acid consists essentially of citric acid. In one embodiment, the polymer is a glycerol-tricarboxylic acid polyester, in particular a glycerol citric acid polyester, with a carbon content of at most 43.00 wt.% and a hydrogen content of at most 5.40 wt.%.

In another embodiment the acid contains at least 50 mol% of succinic acid, preferably at least 70 mole%. It has appeared that the use of succinic acid may result in a composition with good water-resistance. In another embodiment the acid contains at least 50 mol% of itaconic acid, preferably at least 70 mole%. It has appeared that the use of itaconic acid may result in a composition with good water-resistance.

The molar ratio between the polyalcohol and the polyacid will be governed by the ratio between the number of reacting groups in the alcohol(s) and acid(s) used.

In general, the ratio between the number of OH groups and the number of acid groups is between 5:1 and 1:5.

Where the coating layer will be covered with a further coating layer, that is, where the coating is an adhesive, the ratio between OH groups and acid groups acid may in one embodiment be between 5:1 and 1:2, in particular between 5:1 and 1:1. It appears that the use of an excess of OH groups, in particular glycerol, may be advantageous in this application.

Where the polymer layers is the outer layer, it may be preferred for the ratio between hydroxyl groups and acid groups to be between 5:1 and 1:5. In one embodiment, preferably between 1.2:1 and 1:1.2, more preferably between 1.1:1 and 1:1.1. The theoretical molar ratio is 1:1.

The polyester may be manufactured as follows. In a first step, the alcohol and the acid are combined to form a liquid phase. Depending on the nature of the compounds this can be done, e.g., by heating the mixture to a temperature where the acid will dissolve in the alcohol, in particular in glycerol. Depending on the nature of the acid this may be, e.g., at a temperature in the range of 20-200°C, e.g., 40-200°C, e.g. 60-200°C, or 90-200°C. If so desired, a solvent may be present in the reaction mixture during the manufacture of the polymer, e.g., to result in a less viscous reaction medium and/or to improve the solubility of the components. Solvent may be present, for example, in an amount of 5-50 wt.%, calculated on the total of polymer and solvent, in particular in an amount of 5-20 wt.%. Although other polar solvents can also be used, the use of water is preferred for environmental and cost reasons.

The mixture of alcohol and acid is subjected to a polymerization step. The polymerization may be carried out at a temperature in the range of 20 to 200°C, preferably in the range of 40 to 150°C, more in particular 40-130°C. The reaction may be carried out at atmospheric pressure, but if so desired also at higher or lower pressures.

If the mixture comprises a combination of acid and alcohol without solvent, it may be desired to keep the reaction temperature at a value which is sufficiently high to keep the mixture in the liquid phase. The temperature may be above 40°C, in particular above 60°C, more in particular above 80°C. In some embodiments the temperature may be above 100°C, e.g., in the range of 100-200°C, in particular 100-150°C, more in particular 100-130°C.

Where a solvent is present, the reaction temperature may be lower, e.g., in the range of 20°C or higher, more in particular in the range of 40°C or higher, e.g., at a temperature of 40-100°C, in particular 50-100°C, because the solvent will help to dissolve the acid in the alcohol.

The reaction time is selected such that a polymer is obtained with a viscosity appropriate for applying onto a carrier in the form of a coating composition, whether or not in combination with additional components, as will be discussed in more detail below. The reaction time may, e.g., be of the order of 5 minutes to 12 hours, more in particular 5 minutes to 6 hours.

In one embodiment the polymerization step may be carried out for at least part of the time above the boiling point of water, that is, above the point where the vapor pressure of the liquid equals the environmental pressure surrounding the liquid. When the reaction is carried out at atmospheric pressure it is therefore preferred for the reaction to be carried out at a temperature above 100°C, more in particular at 105°C or higher. In one embodiment the polymer is kept at a temperature of between 100°C and 200°C, in particular 100-150°C, more in particular 100-130°C, for at least part of the period from the start of the reaction until the desired conversion is obtained. When the reaction is carried at reduced pressure within this embodiment, the reaction may be carried out at lower temperatures, e.g., a temperature of between 80°C and 100°C at a pressure of, say, 0.10-0.8 mbar.

It is preferred for the polyester to have a degree of polymerization at the point of combining it with the carrier in the range of 20 to 98 wt.%, in particular in the range of 40 to 98 wt.%, or in the range of 20-50 wt.%. The degree of polymerization will depend on the desired viscosity and on the further polymerization steps. It will also depend on the temperature at which the polymer is combined with the carrier.

If so desired, a polymerization catalyst may be added to the reaction mixture. Suitable catalysts for polyester manufacture are known in the art. They include, e.g., p-toluene sulphonic ester and tin oxalate, and sulphuric acid. It is within the scope of the skilled person to select a suitable catalyst.

It has been found, however, that the use of a catalyst is generally not required.

### The coating composition

As will be discussed in more detail below, the coating layer is obtained by applying a coating composition onto a carrier. The most important component of the coating layer of the laminate of the present invention is the polyester reaction product of alcohol and polyacid.

Other components may be present in the coating composition to provide specific properties. Examples of other components include catalysts, colorants, fillers, and additional polymers. In one embodiment less than 50 wt.% of the coating layer is made up of other components, preferably less than 30 wt.%, more preferably less than 20 wt.%, more preferably less than 10 wt.%. In some embodiments it may be preferred for the mixture to contain less than 5 wt.% of additional components, or even less than 2 wt.%. The above pertains to components which end up in the final product. For example, water or other solvents which are evaporated from the final product, if any, are not included herein.

If so desired, the coating composition according to the invention may encompass additional polymers. It is preferred for these polymers to be degradable and/or based on biomaterials. Examples of suitable polymers include polymers derived from lactic acid, glycolic acid, cellulose, and bioethanol.

It is preferred for the coating composition used in the laminate according to the invention to be free of epoxyresins and other resins containing aromatic structures and N- and S-heteroatoms. In one embodiment, the coating composition contains less than 5 wt.% of epoxyresin, in particular less than 2 wt.% of epoxyresin.

In one embodiment of the present invention, the polyester of alcohol and polyacid makes up at least 50 wt.% of the total of polymer present in the coating composition, in particular at least 70 wt.%, more in particular at least 80 wt.%, still more in particular at least 90 wt.%. In one embodiment, the coating composition does not contain other polymers than the polyester of alcohol and polyacid.

The coating composition may contain additional components, in particular components which have no impact on the environment and/or do not interfere with the disposal properties of the laminate. Examples include inert fillers like ash, carbon, silica (sand), titania, and other inert materials.

The coating composition may contain other components known in the art, e.g., stabilizers. It is within the scope of the skilled person to select further components if so required.

In one embodiment, the coating composition or the laminate according to the invention do not comprise any material that would make it unsuitable for disposal by burning by landfilling, or as organic waste.

The coating composition comprising the polyester of the present invention will be liquid under application conditions, and will be subjected to a further curing or hardening step. The viscosity of the coating composition at the point of combining it with the carrier has to be such that the coating composition can be applied easily in the required thickness. It is within the scope of the skilled person to determine a suitable viscosity, taking the nature and amount of polymer, the nature and amount of solvent, if any, and the nature and amount of further components into account.

The coating composition may be manufactured by combining the polymer with any other components, and mixing the components together in a manner known in the art. Solvents, in particular water, may be added if so required.

### The laminate

The laminate according to the invention comprises a carrier and a coating layer, wherein the coating layer is applied over at least part of the carrier.

In one embodiment, the coating layer is present on the outer surface of the laminate. In this embodiment, the coating layer has a thickness in the range of 10-4000 microns, in particular in the range of 100 to 4000 microns, more in particular in the range of 1000-3000 microns. It may serve to improve the appearance of the surface, to protect it from outside influences, e.g., from scratching, to create a repelling layer, e.g., a water-repelling layer, and/or to provide additional properties.

Examples of embodiments where the coating layer is present on the outer surface of the laminate include, e.g., the use in molds in the processing of concrete.

In one embodiment of the present invention, a second carrier is applied over at least part of the coating layer. In this embodiment the coating layer is in effect used as an adhesive. It has been found that the composition used in the present invention is suitable for adhering various types of carriers to each other. Accordingly, the carriers used may be the same or different.

In one embodiment the - or at least one of the - carriers in the laminate comprises a ceramic material, wherein ceramic includes glass.

In one embodiment the - or at least one of the - carriers in the laminate comprises metal, e.g., a metal sheet.

In one embodiment the - or at least one of the - carriers in the laminate comprises wood or a wood-based material.

In one embodiment the laminate comprises a stack of carriers with coating layers sandwiched between the carriers, and/or applied on one or more outer surfaces of the laminate.

In this embodiment the laminate may, e.g., by a stack of wood or wood-based carriers with intermediate coating layers. For example, the laminate may be a multiplex-type material comprising 2-20 wood-based carrier layers, for example 2-5 wood-based carrier layers, with a thickness of, e.g., 0.2-5 mm, in particular 0.5-3 mm.

The coating layers sandwiched between the wood-based layers have a thickness of 10-2000 microns, more in particular in the range of 10-500 microns.

Coating layers may or may not be applied on one or more outer surfaces of the laminate. In one embodiment, coating layers are applied to the outer surfaces of the laminates. The coating layers on the outside of the laminate have a thickness of, for example, 100-200 microns, in particular 500-2000 microns.

This embodiment of the present invention provides an alternative for, e.g., triplex and multiplex materials known in the art, wherein the environmentally friendly nature of the product allows it being disposed of as organic waste.

### Manufacture of the laminates

The laminate according to the invention can be obtained by applying the coating composition onto the carrier, followed by subjecting the material to a further curing step to increase the degree of polymerization of the polyester.

The step of applying the coating onto the carrier can be carried out by methods known in the art, e.g., by spraying, brushing, roll-coating, dipping, or by other methods known in the art. It may be preferred for the polymer to be applied at elevated temperature, e.g., at a temperature of above 60°C, in particular above 80°C. In one embodiment the temperature is between 100 and 150°C. The advantage of applying the polymer at relatively high temperature is that it allows processing of a polymer with a relatively high degree of polymerization at acceptable viscosity. This ensures that the curing step of the final laminate can be relatively short. The further curing step to increase the degree of polymerization of the polyester is generally carried out until the polymer has reached a degree of polymerization of at least 70%, in particular at least 80%, more in particular at least 90%, in some embodiments at least 95%.

The further curing step is preferably carried out by subjecting the coated carrier to a temperature in the range of 20-200°C, in particular 40-150°C, more in particular 80-130°C.

The duration of the curing step will depend on the polymerization temperature and desired degree of polymerization, and may vary between wide ranges. In one embodiment, the polymerization time is between 5 minutes and 5 days. In the presence of catalyst at elevated temperatures the polymerization time could, e.g., be in the range of 5 minutes to 12 hours, more in particular 0.5 hours to 6 hours. The polymerization time may also be at least 1 hour, or at least 2 hours, or at least 4 hours. In one embodiment, the polymerization time in the range of 2 hours to 5 days, in particular 2 hours to 24 hours, more in particular in the range of 4 to 18 hours, still more in particular in the range of 8-20 hours.

Where a further carrier is present over at least part of the coating layer, it may be preferred to apply pressure to the thus-formed stack. In this embodiment, a pressure is applied which generally is in the range of 1-100 bar, in particular 2-50 bar, more in particular 2-20 bar.

In one embodiment the temperature of the reaction mixture is not elevated above 130°C before a conversion of at least 90% has been obtained. It is preferred that the temperature of the reaction mixture is not elevated above 130°C before a conversion of at least 95% has been obtained, more in particular a conversion of at least 98%. This is to prevent decomposition of the acid which may cause discoloration of the product and may affect the properties of the polymer. It is believed that when the reaction is complete or substantially complete, the polymer will tolerate higher temperatures, because at that point in time the acid has already been polymerized, reducing the risk of decarboxylation. For example, it has been found that when the desired degree of conversion is reached, the polymer can be heated further to a temperature of, e.g., 150°C without further problems. This means that it can be used in many industrial and technological applications. In one embodiment it is preferred for the temperature of the polymer to be not elevated above 125°C before a conversion of at least 90% has been obtained. A maximum temperature of 120°C may be more preferred. It is also preferred that temperatures above these values are not reached before a conversion of at least 95% has been obtained, more in particular a conversion of at least 98%.

In one embodiment the curing step may be carried out for at least part of the time above the boiling point of water, that is, above the point where the vapor pressure of the liquid equals the environmental pressure surrounding the liquid. When the reaction is carried out at atmospheric pressure it is therefore preferred for the reaction to be carried out at a temperature above 100°C, more in particular at 105°C or higher. In one embodiment the polymer is kept at a temperature of between 100°C and 130°C for at least part of the period from the start of the reaction until a conversion of at least 90% is obtained.

When the reaction is carried at reduced pressure within this embodiment, the reaction may be carried out at lower temperatures, e.g., a temperature of between 80°C and 100°C at a pressure of 0.10 mbar.

Combinations of various temperature and pressure regimens may be envisaged.

As the polymer used in the present invention shows strong adherence to glass and metal, it may be preferred to perform the coating and curing step in surroundings provided with a non-stick coating. This can be, for example, a Teflon coating, or a silicone rubber coating. Suitable coating materials are known in the art.

It may be preferred for the manufacture of the coating composition and/or the laminate to take place in an inert atmosphere, e.g., under nitrogen or argon, to prevent reaction of the polymer or the monomers with the oxygen from the air, which may result in yellowing of the polymer.

The polymer used in the present invention will slowly hydrolyze when brought into contact with water. The hydrolyzation speed will depend in the degree of polymerization. Accordingly, if a certain degree of degradability is desired, e.g., in packaging applications, a lower degree of polymerization may be selected, e.g., between 70 and 90%. However, in cases where a more stable material is desired, with a longer degradation time, a higher degree of polymerization may be more attractive. In this case, a degree of polymerization of more than 90%, e.g., of at least 93%, at least 96%, or at least 98% may be aimed for.

In general, the materials with a lower degree of conversion will be more flexible than materials with a higher degree of conversion.

The carriers used in the present application may have any shape. Examples include plates, but the invention also pertains to carriers with a three-dimensional (= non-flat) shape. Where two or more carriers are used, they may have the same shape, e.g., in the case of triplex-type materials, but the shapes may also be different.

It has been found that the laminate of the present invention is particularly attractive in applications where fire-hazards may exist.

Fire is a hazard which may occur in many locations, from the home to vehicles such as trains, planes, ships, trucks, and passenger cars, offices, factories, tunnels, and open locations. To prevent the risks associated with fire, flame-retardant materials are used in many locations. To improve the flame retardancy of a material, flame retardant additives are often incorporated therein. Such additives include halogenated flame-retardants containing, e.g., bromine, chlorine, or iodine, metal hydrates, and nitrogen and phosphorus-based flame retardants. It has been found, however, that these flame retardant additives may in themselves constitute a HSE risk. This goes in particular for the halogen-containing compound such as the bromine-containing compounds.

Thus, there is a need in the art for materials which catch fire only slowly, may show self-extinguishing properties, or may hot catch fire at all. Such a material may be useful in many applications where the proliferation of fire is to be prevented. It has been found that the specific polyester used in the laminate of the present invention, and therewith the laminate itself, have good flame-retardant properties. More in particular, the laminate does not easily catch fire, may shows self-extinguishing properties, and may not catch fire at all.

The use of the specified laminate comprising the specified polyester makes it possible to reduce the content of flame-retardant additives such as halogenated flame-retardants, metal hydrates, and nitrogen and phosphorus-based flame retardants. Depending on the application, the use of the specified polyester may even make it possible to dispense with the use of flame-retardant additives such as halogenated flame-retardants, metal hydrates, and nitrogen and phosphorus-based flame retardants altogether.

The present invention thus also pertains to a kit of parts comprising a part susceptible to degradation by thermal loads and a part comprising flame retardant part. The kit of parts of the present invention has numerous further advantages, which will become apparent from the further specification.

The present invention pertains to a kit of parts comprising a part susceptible to degradation by thermal loads and a part comprising the laminate of the present invention, which comprises 10-98 wt.% of a synthetic particulate or fibrous filler and at least 2 wt.% of a polyester derived from an aliphatic polyalcohol with 2-15 carbon atoms and polyacid, wherein the alcohol comprises at least 50 mole% of glycerol, and the acid comprises at least 50 wt.% of tricarboxylic acid.

It has been found that the specific polyester used in the present invention shows good flame retardant properties. Additionally, it may in many applications be used without further flame retardant additives, in particular halogen-containing compounds, more in particular bromine-containing compounds, being required.

The wording "part susceptible to thermal loads" encompasses everything which, when subjected to fire or heat, suffers from degradation. They may, for example, burn, explode, melt, or suffer from a decrease in functional properties, e.g., mechanical properties.

The wording "kit of parts" as used within the present specification should be interpreted broadly. It encompasses a combination of a part susceptible to thermal loads and a part comprising the laminate according to the invention wherein the kit is provided together, e.g., in the situation wherein the two parts of the kit of parts are connected to form a single object, e.g., a television comprising a screen (the part susceptible to thermal loads) and a casing comprising the laminate. It also encompasses the situation wherein the part susceptible to thermal loads and the part containing the laminate are provided separately, e.g., in the situation where the part containing the laminate is combined with the part susceptible to thermal loads at the location of use, e.g., the use of panels comprising the polyester in a tunnel or building. In the latter case, it is not necessary to the parts to be combined in a permanent manner. The invention also provides for the situation wherein the kit of parts exists only temporarily.

In one embodiment the present invention pertains to an assembly comprising a part susceptible to degradation by thermal loads and a cover surrounding said part in whole or in part, wherein the cover comprises the laminate comprising the specified polyester.

The word cover in the present specification should be interpreted broadly. It encompasses housings surrounding a part susceptible to thermal loads, but it also encompasses shielding that may be placed between the possible fire location and the part susceptible to thermal loads.

An example of an assembly according to the invention is electronic apparatus provided with a casing, e.g., computers, televisions and other screens, audio and video apparatus, etc. In this embodiment that invention pertains to an electronic apparatus comprising electronic parts susceptible to thermal loads and a casing comprising the specified laminate.

A further example of a kit of parts or assembly according to the invention is a building structure provided with a panel comprising the specified laminate. Examples of building structures include homes, offices, factories, tunnels, and bridges.

Examples of panels include paneling for walls, floors, ceilings, doors, and shutters.

The present invention thus also pertains to panels comprising the specified laminate which are provided with fastening means for application in building structures.

A further example of an assembly according to the invention is a vehicle provided with a panel comprising the specified laminate. Panels may encompass, e.g., panels used in interiors of trains, planes, ships, trucks, and passenger cars. Examples include dashboard panels, side panels, shelves, seats and seat covers, fuel tanks and fuel tank shielding, etc.

In one embodiment, the properties of the flame retardant part are such that the time-to-degradation of the part susceptible to thermal loads is increased with at least 10% as compared to the situation where the part is subjected to a thermal load in the absence of a cover or casing. In particular, the time-to-degradation is increased with at least 30%, more in particular at least 50%, even more in particular at least 100%. The increase in time-to-degradation may in one embodiment be at least 200%, or at least 300%, or at least 400%.

In one embodiment the flame retardant part is substantially free from bromine-containing flame-retardant additives. In one embodiment the flame retardant part is substantially free from halogen-containing flame-retardant additives. In a further embodiment, the flame retardant part is substantially free from halogen-, nitrogen, or phosphorus-containing flame-retardant additives. In this context the word substantially free means that the compound is not added on purpose, and only present in amounts which cannot be avoided.

The present invention also pertains to a part and cover as described above.

The present invention also pertains to the use of the specified laminate as flame retardant material. In one embodiment, an intermediate product comprising said polyester is applied as a flame retardant material. The invention also pertains to said intermediate product.

The invention also pertains to a method for decreasing the fire-propagating properties of a system comprising incorporating therein a part comprising a laminate comprising the specified polyester. The invention also pertains to a fire protecting.cover comprising the specific laminate comprising said polyester. In one embodiment, the cover is intended for protecting the human or animal body.

The laminates according to the invention have may uses. In one embodiment, they may for example be used in the invention as described the patent application in with the same inventors and the same filing date as the present application with the title of "Kit of parts comprising part susceptible to degradation by thermal loads and part comprising specific polymer". The disclosure of that application, including its various embodiments is herewith incorporated herein by reference, in particular as regards the various kits and assemblies in which the material may be used, and the uses to which it may be put.

The present invention is illustrate by the following examples, without being limited thereto or thereby.

### Example 1: Coated carrier with citric acid based polymer

Citric Acid (10 grams) and Reagent Grade Glycerol (5 grams). were heated at 100°C for 5 minutes, after which 500 mg p-toluenesulphonic acid were added. The liquid was poured on plywood occupying a surface of 200 cm2 resulting in a film with ca. 100 mg per cm2. The sample was cured at 115°C for 15 hrs. The brown coating peeled off when the substrate was immersed in water for 2 days.

### Example 2: Adhesion of wood carriers using citric acid based polymer

A stock supply of the citric acid and glycerol polymer was prepared as follows:100 grams of Citric Acid Monohydrate and 50 grams of Reagent Grade Glycerol were heated at 120°C for 5 minutes. 500 mg of p-tolune-sulphonic acid were added and the viscous liquid was allowed to cool in a plastic container. It can be kept and transported at room temperature with a shelf life of at least several months.

Three slabs of 12 mm thick wood (10*10 cm) with a weight of 21.9 grams were wetted with in total 11 grams of the above resin and stacked. The sample was cured in an oven under the weight of a 1 kg stone. After 3 hrs the weight of the sample 29.6 indicating loss of ca. 3 grams of water, correlating to more than 95% of polymerization.

The wood slabs were firmly glued together.

### Example 6: Adhesion of wood carriers using citric acid based polymer

Citric Acid Monohydrate (40 grams) and Reagent Grade Glycerol (80 grams) were heated at 140°C with stirring in an open beaker. 2 ml of concentrated hydrochloric acid were added and the heating was continued for 2 hrs. Vigorous evolution of water was observed in the foaming viscous semi-liquid.

Ca. 10*10 cm2 woodslabs of 1.2 mm thickness, in total 29 grams, were wetted with, in total for all layers 8 grams of the resin and stacked with a wood slab on top. The stack was cured at 140°C for 2 hrs under a pressure of 10 bars (10 kN force) in a hydraulic heat press (Rondol).

Polymerization was complete at over 90%, as indicated by the loss of weight of 2.5 grams of water. The slabs were firmly glued together.

## Claims

1. Laminate comprising a carrier and a coating layer, wherein the coating layer is applied over at least part of the carrier, the coating layer comprising a polyester derived from an aliphatic polyalcool with 2-15 carbon atoms and a polyacid, the coating layer having a thickness in the range of 10-4000 microns, wherein the aliphatic polyalcohol contains at least 50 mol.% of glycerol and the polyacid contains at least 30 wt.% of tricarboxylic acid.

2. Laminate according to claim 1 comprising a second carrier applied over at least part of the coating layer, preferably comprising a further coating layer applied over at least part of the second carrier, with optional further carrier-coating stacks applied over the further carrier.

3. Laminate comprising a stack of carriers with coating layers sandwiched between the carriers, and/or applied on one or more outer surfaces of the laminate, at least one of the coating layers comprising a polyester derived from an aliphatic polyalcohol with 2-15 carbon atoms and polyacid and having a thickness in the range of 10-4000 microns, wherein the aliphatic polyalcohol contains at least 50 mol.% of glycerol and the polyacid contains at least 30 wt.% of tricarboxylic acid.

4. Laminate according to any one of the preceding claims wherein the polyalcohol comprises at least 70 mol%, more in particular at least 90 mole%, or even at least 95 mole% of glycerol, or consists essentially of glycerol.

5. Laminate according to any one of the preceding claims wherein the acid contains at least 50 wt.% of tricarboxylic acid, preferably citric acid, calculated on the total amount of acid, preferably at least 70 wt.%, more in particular at least 90 wt.%, or even at least 95 wt.%.

6. Laminate according to any one of the preceding claims, wherein the acid contains at least 10 wt.% of dicarboxylic acid, calculated on the total amount of acid, preferably at least 30 wt.%, more preferably at least 50 wt.%.

7. Laminate according to claim 6, wherein the dicarboxylic acid contains at least 50 mol% of succinic acid or itaconic acid, preferably at least 70 mole%, more in particular at least 90 mole%, or even at least 95 mole%.

8. Laminate according to any one of the preceding claims, wherein the carrier is a wood-based material.

9. Laminate according to claim 8, which comprises 2-20 wood-based carrier layers, for example 2-5 wood-based carrier layers, with a thickness of, e.g., 0.2-5 mm, in particular 0.5-3 mm, preferably wherein a further coating layer is applied on one or more outer surfaces of the laminate.

10. Method for manufacturing a laminate according to any one of the preceding claims wherein a carrier is provided with a layer of a coating composition comprising a polyester derived from aliphatic polyalcohol and polyacid, wherein the aliphatic polyalcohol contains at least 50 mol.% of glycerol and the polyacid contains at least 30 wt.% of tricarboxylic acid, and the coated carrier is kept at a temperature of 20 to 200°C for a period of 5 minutes to 5 days.

11. Kit of parts comprising a part susceptible to degradation by thermal loads and part comprising a laminate according to any one of claims 1-9, preferably wherein said kit off parts is an assembly comprising a part susceptible to degradation by thermal loads and a cover surrounding said part in whole or in part, wherein the cover comprises a polyester derived from an aliphatic polyalcohol with 2-15 carbon atoms and a polyacid, wherein the aliphatic polyalcohol contains at least 50 mol.% of glycerol and the polyacid contains at least 30 wt.% of tricarboxylic acid.

12. Part for use in a kit of parts according to claim 11, which comprises a laminate according to any one of claims 1-9, preferably wherein said part is a cover for use in an assembly according to claim 11.

13. Use of a laminate according to any one of claims 1-9 as flame retardant material.

14. Method for decreasing the fire-propagating properties of a system comprising incorporating therein a part comprising a laminate according to any one of claims 1-9.

15. Fire-protecting cover comprising a laminate according to any one of claims 1-9, preferably which is intended for protecting the human or animal body.

## Patentansprüche

1. Laminat umfassend einen Träger und eine Deckschicht, wobei die Deckschicht über mindestens einem Teil des Trägers aufgebracht ist, die Deckschicht einen von einem aliphatischen Polyalkohol mit 2 bis 15 Kohlenstoffatomen und einer Polysäure abgeleiteten Polyester umfasst, die Deckschicht eine Dicke im Bereich von 10 bis 4000 Mikron aufweist, wobei der aliphatische Polyalkohol mindestens 50 Mol-% Glycerin enthält und die Polysäure mindestens 30 Gew.-% Tricarbonsäure enthält.

2. Laminat gemäß Anspruch 1, umfassend einen zweiten Träger, der über mindestens einem Teil der Deckschicht aufgebracht ist, bevorzugt umfassend eine weitere Deckschicht, die über mindestens einem Teil des zweiten Trägers aufgebracht ist, mit gegebenenfalls weiteren Träger-Deckschicht-Stapeln, die über dem weiteren Träger aufgebracht sind.

3. Laminat umfassend einen Stapel von Trägern, wobei Deckschichten sandwichartig zwischen den Trägern vorhanden sind und/oder an einer oder mehreren Außenoberflächen des Laminats aufgebracht sind, wobei mindestens eine der Deckschichten einen Polyester umfasst, der von einem aliphatischen Polyalkohol mit 2 bis 15 Kohlenstoffatomen und einer Polysäure abgeleitet ist und eine Dicke im Bereich von 10 bis 4000 Mikron aufweist, wobei der aliphatische Polyalkohol mindestens 50 Mol-% Glycerin enthält und die Polysäure mindestens 30 Gew.-% Tricarbonsäure enthält.

4. Laminat gemäß einem der vorangehenden Ansprüche, wobei der Polyalkohol mindestens 70 Mol-%, insbesondere mindestens 90 Mol-%, oder sogar mindestens 95 Mol-% Glycerin umfasst, oder im Wesentlichen aus Glycerin besteht.

5. Laminat gemäß einem der vorangehenden Ansprüche, wobei die Säure mindestens 50 Gew.-% Tricarbonsäure, bevorzugt Zitronensäure, basierend auf der Gesamtmenge von Säure, bevorzugt mindestens 70 Gew.-%, stärker bevorzugt mindestens 90 Gew.-%, oder sogar mindestens 95 Gew.-% enthält.

6. Laminat gemäß einem der vorangehenden Ansprüche, wobei die Säure mindestens 10 Gew.-% Dicarbonsäure, bezogen auf die Gesamtmenge von Säure, bevorzugt mindestens 30 Gew.-%, stärker bevorzugt mindestens 50 Gew.-% enthält.

7. Laminat gemäß Anspruch 6, wobei die Dicarbonsäure mindestens 50 Mol-% Bernstein oder Itaconsäure, bevorzugt mindestens 70 Mol-%, stärker insbesondere mindestens 90 Mol-% oder sogar mindestens 95 Mol-% enthält.

8. Laminat gemäß einem der vorangehenden Ansprüche, wobei der Träger ein holzbasiertes Material ist.

9. Laminat gemäß Anspruch 8, das 2 bis 20 holzbasierte Trägerschichten umfasst, zum Beispiel 2 bis 5 holzbasierte Trägerschichten, mit einer Dicke von beispielsweise 0,2 bis 5 mm, insbesondere 0,5 bis 3 mm, wobei bevorzugt eine weitere Deckschicht auf einer oder mehreren Außenoberflächen des Laminat aufgebracht ist.

10. Verfahren zur Herstellung eines Laminats gemäß einem der vorangehenden Ansprüche, wobei ein Träger mit einer Schicht einer Beschichtungszusammensetzung versehen wird, die einen von einem aliphatischen Polyalkohol und einer Polysäure abgeleiteten Polyester umfasst, wobei der aliphatische Polyalkohol mindestens 50 Mol-% Glycerin enthält und die Polysäure mindestens 30 Gew.-% Tricarbonsäure enthält, und der beschichtete Träger für einen Zeitraum von 5 Minuten bis 5 Tagen bei einer Temperatur von 20 bis 200 °C gehalten wird.

11. Satz von Teilen umfassend ein Teil, das bei thermischen Belastungen zersetzungsanfällig ist und einen Teil der ein Laminat gemäß einem der Ansprüche 1 bis 9 umfasst, wobei der Satz von Teilen bevorzugt eine Anordnung ist, der einen Teil, der durch thermische Belastungen zersetzungsanfällig ist, und eine Abdeckung, die den Teil ganz oder teilweise umgibt, umfasst, wobei die Abdeckung einen Polyester enthält, der von einem aliphatischen Polyalkohol mit 2 bis 15 Kohlenstoffatomen und einer Polysäure abgeleitet ist, wobei der aliphatische Polyalkohol mindestens 50 Mol-% Glycerin enthält, und die Polysäure mindestens 30 Gew.-% Tricarbonsäure enthält.

12. Teil zur Verwendung in einem Satz von Teilen gemäß Anspruch 11, das ein Laminat gemäß einem der Ansprüche 1 bis 9 umfasst, wobei dieses Teil bevorzugt eine Abdeckung zur Verwendung in einer Anordnung gemäß Anspruch 11 ist.

13. Verwendung eines Laminat gemäß einem der Ansprüche 1 bis 9 als Flammschutzmaterial.

14. Verfahren zur Verringerung der feuerausbreitenden Eigenschaften eines Systems, das das darin Einbringen eines Teils, das ein Laminat gemäß einem der Ansprüche 1 bis 9 umfasst, umfasst.

15. Feuerschutzabdeckung, die ein Laminat gemäß einem der Ansprüche 1 bis 9, das bevorzugt zum Schutz des menschlichen oder tierischen Körpers bestimmt ist, umfasst.

## Revendications

1. Stratifié comprenant un support et une couche de revêtement, dans lequel la couche de revêtement est appliquée sur au moins une partie du support, la couche de revêtement comprenant un polyester dérivé d'un polyalcool aliphatique ayant 2 à 15 atomes de carbone et un polyacide, la couche de revêtement ayant une épaisseur se trouvant dans la plage allant de 10 à 4000 microns, où le polyalcool aliphatique contient au moins 50% en moles de glycérol et le polyacide contient au moins 30% en poids d'acide tricarboxylique.

2. Stratifié selon la revendication 1 comprenant un deuxième support appliqué sur au moins une partie de la couche de revêtement, comprenant de préférence une couche de revêtement supplémentaire appliquée sur au moins une partie du deuxième support, avec des empilements support-revêtement supplémentaires facultatifs appliqués sur le support supplémentaire.

3. Stratifié comprenant un empilement de supports avec des couches de revêtement prises en tenaille entre les supports, et/ou appliquées sur une ou plusieurs surface(s) externe(s) du stratifié, au moins l'une des couches de revêtement comprenant un polyester dérivé d'un polyalcool aliphatique ayant 2 à 15 atomes de carbone et un polyacide et ayant une épaisseur se trouvant dans la plage allant de 10 à 4000 microns, où le polyalcool aliphatique contient au moins 50% en moles de glycérol et le polyacide contient au moins 30% en poids d'acide tricarboxylique.

4. Stratifié selon l'une quelconque des revendications précédentes, dans lequel le polyalcool comprend au moins 70% en moles, plus particulièrement au moins 90% en moles, ou même au moins 95% en moles de glycérol, ou est essentiellement constitué de glycérol.

5. Stratifié selon l'une quelconque des revendications précédentes, dans lequel l'acide contient au moins 50% en poids d'acide tricarboxylique, de préférence de l'acide citrique, calculé sur la base de la quantité totale d'acide, de préférence au moins 70% en poids, plus particulièrement au moins 90% en poids, ou même au moins 95% en poids.

6. Stratifié selon l'une quelconque des revendications précédentes, dans lequel l'acide contient au moins 10% en poids d'acide dicarboxylique, calculé sur la base de la quantité totale d'acide, de préférence au moins 30% en poids, plus préférablement au moins 50% en poids.

7. Stratifié selon la revendication 6, dans lequel l'acide dicarboxylique contient au moins 50% en moles d'acide succinique ou d'acide itaconique, de préférence au moins 70% en moles, plus particulièrement au moins 90% en moles, ou même au moins 95% en moles.

8. Stratifié selon l'une quelconque des revendications précédentes, dans lequel le support est un matériau à base de bois.

9. Stratifié selon la revendication 8, qui comprend 2 à 20 couches de support à base de bois, par exemple 2 à 5 couches de support à base de bois, avec une épaisseur, par exemple, de 0,2 à 5 mm, en particulier de 0,5 à 3 mm, de préférence dans lequel une couche de revêtement supplémentaire est appliquée sur une ou plusieurs surface(s) externe(s) du stratifié.

10. Procédé de fabrication d'un stratifié selon l'une quelconque des revendications précédentes, dans lequel un support est pourvu d'une couche d'une composition de revêtement comprenant un polyester dérivé d'un polyalcool aliphatique et un polyacide, où le polyalcool aliphatique contient au moins 50% en moles de glycérol et le polyacide contient au moins 30% en poids d'acide tricarboxylique, et le support revêtu est maintenu à une température comprise entre 20 et 200°C pendant une période allant de 5 minutes à 5 jours.

11. Kit de pièces comprenant une pièce sensible à la dégradation par des charges thermiques et une pièce comprenant un stratifié selon l'une quelconque des revendications 1 à 9, de préférence dans lequel ledit kit de pièces est un ensemble comprenant une pièce sensible à la dégradation par des charges thermiques et un revêtement entourant ladite pièce en totalité ou en partie, dans lequel le revêtement comprend un polyester dérivé d'un polyalcool aliphatique ayant 2 à 15 atomes de carbone et un polyacide, dans lequel le polyalcool aliphatique contient au moins 50% en moles de glycérol et le polyacide contient au moins 30% en poids d'acide tricarboxylique.

12. Pièce à utiliser dans un kit de pièces selon la revendication 11, qui comprend un stratifié selon l'une quelconque des revendications 1 à 9, de préférence dans laquelle ladite pièce est un revêtement destiné à être utilisé dans un ensemble selon la revendication 11.

13. Utilisation d'un stratifié selon l'une quelconque des revendications 1 à 9 en tant que matériau ignifuge.

14. Procédé permettant de diminuer les propriétés de propagation de feu d'un système comprenant l'incorporation dans celui-ci d'une pièce comprenant un stratifié selon l'une quelconque des revendications 1 à 9.

15. Revêtement de protection contre le feu comprenant un stratifié selon l'une quelconque des revendications 1 à 9, qui est destiné, de préférence, à protéger le corps d'un être humain ou d'un animal.
